# EUROPÄISCHE PATENTSCHRIFT

(11) **EP 4 026 757 B1**
(45) Veröffentlichungstag und Bekanntmachung des Hinweises auf die Patenterteilung: **08.03.2023**
(21) Anmeldenummer: 21382008.7
(22) Anmeldetag: 12.01.2021
(51) Int. Cl.: B62D 21/11, B62D 65/02

(54) **BAUGRUPPE MIT REFERENZPUNKTSYSTEM**
ASSEMBLY WITH REFERENCE POINT SYSTEM
MODULE POURVU DE SYSTÈME DE POINTS DE RÉFÉRENCE

(43) Veröffentlichungstag der Anmeldung: 13.07.2022
(73) Patentinhaber: Autotech Engineering S.L., 48340 Amorebieta-Etxano (ES); Gestamp Umformtechnik GmbH, 33647 Bielefeld (DE)
(72) Erfinder: Krolo, Mario, 33803 Steinhagen (DE); Pascual Barrio, Idoya, 08630 Barcelona (ES); Burguete del Castillo, Javier, 31007 Navarra (ES)
(74) Vertreter: Cohausz & Florack

(56) Entgegenhaltungen:
- WO-A2-02/38403
- DE-A1- 10 260 529
- US-A1- 2018 186 417

## Beschreibung

Die Erfindung betrifft eine Baugruppe für ein Kraftfahrzeug, insbesondere in Form eines Hilfsrahmens, aufgebaut aus Einzelbauteilen, die zur Positionierung bei ihrer Herstellung und/oder zur Positionierung bei ihrem Zusammenbau miteinander oder mit weiteren Bauteilen ein Referenzpunktsystem aufweisen, wobei dieses durch Referenzpunkte in Form mindestens eines als 2-Wege-Referenz geeigneten Loches und mindestens eines Langloches als 1-Weg-Referenz gebildet ist.

Zur Qualitätssicherung in der Bauteilfertigung ist die sachgemäße Lagerung von Einzelbauteilen und einer daraus gebildeten Baugruppe wichtig. Dies gilt insbesondere für die Lagerung von Einzelbauteilen und Baugruppen mittels Messaufnahmen zur Einhaltung einer vorgegebenen Maßgenauigkeit, sowie für die wiederholgenaue Lagerung der Einzelbauteile beim Fügen einer Baugruppe im Zusammenbau, um die Reproduzierbarkeit der Baugruppengeometrie sicherzustellen.

Die Bauteillage von Einzelbauteilen sowie einer daraus gebildeten Baugruppe wird im Stand der Technik durch ein sogenanntes Referenzpunktsystem genau festgelegt. In der Regel definiert das Referenzpunktsystem der Baugruppe die jeweiligen Referenzpunktsysteme der Einzelbauteile, wobei in der Automobilindustrie das Referenzpunktsystem der Baugruppe üblicherweise vom Fahrzeughersteller vorgegeben wird. Die Anwendung des Referenzpunktsystems hat sich in der Praxis grundsätzlich bewährt.

Dabei kann jedoch im Rahmen der Baugruppenfertigung bei der Lagerung der Bauteile das Problem auftreten, dass bei symmetrischen Einzelteilpaarungen aus linken und rechten Einzelteilen, zum Beispiel einem linken Längsträger und einem rechten Längsträger eines Hilfsrahmens, prozessbedingt ein Einzelteil der Paarung von der Baugruppe abweichende Referenzpunkte aufweist.

Jeder Körper hat im dreidimensionalen Raum sechs Freiheitsgrade, und zwar drei translatorische Freiheitsgrade und drei rotatorische Freiheitsgrade. Um einen Körper eindeutig bestimmt zu lagern, müssen diese sechs Freiheitsgrade aneinander gebunden werden. Die Ausrichtung eines Bauteils in der Herstellung einer Baugruppe, zum Beispiel eines Fahrwerkrahmens, oder einer anderen Baugruppe für ein Kraftfahrzeug, erfolgt im Stand der Technik über die sogenannte "3-2-1 Regel". Hierzu wird das betreffende Bauteil über 3 Punkte, die eine Primärebene definieren, 2 weitere Punkte, die relativ zu der Primärebene eine Sekundärebene definieren, und 1 weiteren Punkt, der relativ zu der Primärebene und der Sekundärebene eine Tertiärebene definiert, statisch bestimmt gelagert. Die zur Ausrichtung des Bauteils definierten Punkte werden als Referenzpunkte bezeichnet. Die Geometrie des Bauteils wird durch die statisch bestimmte Lagerung nicht beeinflusst.

Die Referenzpunkte eines Bauteils bilden somit ein bauteilorientiertes Koordinatensystem und definieren zudem die Lage des Bauteils in diesem Koordinatensystem, dem sogenannten Referenzpunktsystem. Das Referenzpunktsystem basiert beispielsweise im Automobilbau auf einem Fahrzeugkoordinatensystem, dessen Ursprung mittig auf Höhe der Vorderachse des betreffenden Fahrzeuges liegt.

Alle Referenzpunkte eines Einzelteils (Einzelbauteils) oder einer Baugruppe werden üblicherweise in den technischen Konstruktionszeichnungen eingetragen. Als Aufnahmepunkte dienen in der Regel Rund- und/oder Langlöcher sowie Flächen. Dabei wird häufig ein Loch-Langloch Prinzip angewandt, indem eine sekundäre und eine tertiäre Referenz durch einen in einem Rundloch aufgenommenen kreiszylindrischen Stift (2-Wege-Referenz) und die zweite tertiäre Ausrichtung durch einen in einem Langloch aufgenommenen zweiten kreiszylindrischen Stift (1-Weg-Referenz) abgebildet werden. Das Langloch gleicht dabei eine Positionstoleranz zu anderen Referenzen aus.

Bei der Anwendung der 3-2-1 Regel sind grundsätzlich folgende Aspekte zu berücksichtigen:
- Die Referenzpunkte sind an stabilen Bauteilbereichen anzuordnen
- Aufnahmelöcher und Aufnahmeflächen sind parallel zum Bauteilkoordinatensystem bzw. zu lokalen Bezugsstellen auszulegen
- Änderungen des Bauteilbezugssystems sind zu vermeiden
- Eine durchgängige Beibehaltung der Referenzpunkte vom Einzelbauteil bis zum Zusammenbauteil für die miteinander zu fügenden Bauteile und Baugruppen soll sichergestellt werden
- Im Zusammenbau sollen die Referenzpunkte aus mess- und montagetechnischen Gründen gut zugänglich sein

Fahrwerkteile, insbesondere Hilfsrahmen und Verbundlenkerachsen, werden üblicherweise als Schweißkonstruktionen aus mehreren Blechteilen und/oder Hydroformrohren hergestellt. Eine spezifische Ausführungsform der geschweißten Hilfsrahmen- bzw. Verbundlenkerachsenkonstruktion ist durch einen linken und einen rechten Längsträger gekennzeichnet, die auch als sogenannte links/rechts Symmetrieteile bezeichnet werden. Bei solchen Baugruppen mit links/rechts Symmetrieteilen tritt das Problem auf, dass eine durchgängige Beibehaltung der Referenzpunkte bei allen Einzelbauteilen hinsichtlich der vom Fahrzeughersteller vorgegebenen Referenzpunkte der Baugruppe nicht möglich ist. Denn zum Beispiel das Referenzpunktsystem des Hilfsrahmens wie auch das Referenzpunktsystem der Längsträger wird gemäß dem Loch-Langloch Prinzip jeweils durch ein Rundloch und ein Langloch bestimmt. Dabei entspricht die Rundlochaufnahme (2-Wege-Referenz) der Baugruppe "Hilfsrahmen" der Rundlochaufnahme (2-Wege-Referenz) des Einzelbauteils "Längsträger links". Die Langlochaufnahme (1-Weg-Referenz) der Baugruppe "Hilfsrahmen", die zum Toleranzausgleich bei der weiteren Montage des Hilfsrahmens benötigt wird, entspricht jedoch nicht der Langlochaufnahme des Einzelbauteil "Längsträger rechts". Symmetriebedingt würde sich an dieser Position eigentlich die Rundlochaufnahme (2-Wege-Referenz) des Einzelbauteils "Längsträger rechts" befinden, was jedoch in der Praxis nicht der Fall ist. Eine durchgängige Beibehaltung der Referenzpunkte von allen Einzelbauteilen (hier: Längsträger rechts) hinsichtlich der Referenzpunkte der Baugruppe (hier: Hilfsrahmen) erscheint somit nicht möglich.

Aus der US 2018/0186417 A1 ist ein Verfahren zum Montieren von Fahrzeugfrontendkomponenten an einem Fahrzeugfrontende bekannt. Das Verfahren umfasst folgende Schritte: Anbringen wenigstens einer Nichthautkomponente an einer Karosserie; Tragen einer ersten Hautkomponente unter Verwendung von wenigstens einer der wenigstens einen Nichthautkomponente, derart, dass die erste Hautkomponente relativ zu der wenigstens einen Nichthautkomponente beweglich ist; Verbinden einer zweiten Hautkomponente mit der ersten Hautkomponente, derart, dass die erste Hautkomponente und die zweite Hautkomponente relativ zueinander fixiert und relativ zur wenigstens einen Nichthautkomponente beweglich sind; und Beschränken einer Bewegung der zweiten Hautkomponente relativ zur wenigstens einen Nichthautkomponente. Mit diesem Verfahren wird beispielsweise eine Motorhaube an verschiedenen Punkten am Fahrzeugfrontende angebracht, wobei die Motorhaube während der Montage so angeordnet wird, dass ein gleichmäßiger Abstand und Bündigkeit zwischen der Motorhaube und den Kotflügeln erzielt wird. Um eine korrekte Positionierung vor der Anbringung zu erzielen, sind in Karosserieträgern Löcher, und zwar Referenzpositionierer vorgesehen. Diese Positionierer beinhalten 2-Wege- und 4-Wegepositionierer, die eine Bewegung in der X-Achsen- und/oder Y-Achsenrichtung beschränken und es zulassen, dass die Motorhaube so positioniert wird, dass ein gleichmäßiger Abstand und Bündigkeit zwischen der Motorhaube und den Kotflügeln vorliegen, wenn die Motorhaube in der angebrachten und geschlossenen Position ist.

Die WO 02/38403 A2 offenbart eine Vorrichtung und ein Verfahren zum Immobilisieren eines Fahrzeug-Fahrwerksrahmens in seinem freien Zustand auf einer Rahmenhalterung, um eine Bezugsposition des Fahrwerksrahmens festzulegen.

Diese Schrift offenbart eine Baugruppe gemäß des Oberbegriffs des Anspruchs 1.

Die DE 102 60 529 A1 beschreibt einen Hilfsrahmen für ein Kraftfahrzeug mit einem vorderen Querträger und einem hinteren Querträger, die über zwei Längsträger miteinander verbunden sind, sowie ein Verfahren zur Herstellung eines solchen Hilfsrahmens. An Endabschnitten des vorderen Querträgers und der Längsträger des Hilfsrahmens ist eine Positionierungseinrichtung vorgesehen, die auf der einen Wandseite eine Öffnung aufweist, sowie ein Stanzloch kleineren Durchmessers auf der gegenüberliegenden Wandseite, dessen Umgebung nach außen vorgewölbt ist, wobei die Vorwölbung außenseitig eine Anlagefläche ausbildet. Über die Stanzlöcher erfolgt die Fixierung der Träger in einer Schweißvorrichtung und bei der Montage des Hilfsrahmens.

Davon ausgehend liegt der Erfindung die Aufgabe zugrunde, eine Baugruppe mit einem Referenzpunktsystem zu schaffen, welches eine durchgängige Beibehaltung der Referenzpunkte vom Einzelbauteil bis zur Baugruppe (Zusammenbauteil) für die miteinander zu fügenden Bauteile ermöglicht.

Diese Aufgabe wird durch eine Baugruppe mit den in Anspruch 1 angegebenen Merkmalen gelöst. Vorteilhafte Ausgestaltungen der Erfindung sind in den auf Anspruch 1 rückbezogenen Unteransprüchen angegeben.

Die erfindungsgemäße Baugruppe ist aus Einzelteilen aufgebaut, die zur Positionierung bei ihrer Herstellung und/oder zur Positionierung bei ihrem Zusammenbau miteinander oder mit weiteren Bauteilen ein Referenzpunktsystem aufweisen, wobei dieses durch Referenzpunkte in Form mindestens eines als 2-Wege-Referenz geeigneten Loches und mindestens eines Langloches als 1-Weg-Referenz gebildet ist, und wobei das als 2-Wege-Referenz geeignete Loch erfindungsgemäß derart ausgebildet ist, dass es bei Aufnahme eines Positionselements, welches ein abgeflachtes oder längliches Querschnittsprofil aufweist, auch als 1-Weg-Referenz geeignet ist, wobei
a) das als 2-Wege-Referenz und auch als 1-Weg-Referenz geeignete Loch im Querschnitt betrachtet vier gleich lange oder nahezu gleich lange Innenseiten aufweist, die miteinander vier rechte Winkel definieren; oder
b) das als 2-Wege-Referenz und auch als 1-Weg-Referenz geeignete Loch ein quadratisches oder achteckiges Innenprofil aufweist, wobei das Innenprofil vorzugsweise abgerundete Ecken aufweist; oder
c) das als 2-Wege-Referenz und auch als 1-Weg-Referenz geeignete Loch ein asymmetrisches Innenprofil aufweist.

Durch die erfindungsgemäße Lösung lässt sich eine durchgängige Beibehaltung der Referenzpunkte vom Einzelbauteil bis zum Zusammenbauteil (Baugruppe) für die miteinander zu fügenden Bauteile sowie Baugruppen auf einfache Weise sicherstellen.

Die Erfindung basiert auf der Grundidee, anstelle eines vom Fahrzeughersteller für eine Baugruppe vorgegebenen Langlochs, das hinsichtlich eines darin aufgenommenen Positionselements, z. B. eines kreiszylindrischen Stiftes, als 1-Weg-Referenz wirkt, ein Loch in das betreffende Einzelbauteil, zum Beispiel den rechten Längsträger eines Hilfsrahmens, einzubringen, welches sowohl als 2-Wege-Referenz als auch bei Aufnahme eines anderen Positionselements, welches ein abgeflachtes oder längliches Querschnittsprofil aufweist, als 1-Weg-Referenz geeignet ist.

Das sowohl als 2-Wege-Referenz als auch als 1-Weg-Referenz geeignete Loch ist gemäß einer erfindungsgemäßen Ausführungsform ein im Wesentlichen quadratisches Loch. Dabei kann der Mittelpunkt dieses quadratischen Loches des betreffenden Einzelbauteils bzw. rechten Längsträgers der "gleichen" Referenzpunktsystem-Position des Mittelpunktes eines Rundloches des symmetrischen linken Einzelbauteils bzw. linken Längsträgers entsprechen.

Im Rahmen der Überprüfung der Maßhaltigkeit des Einzelbauteils (z. B. rechten Längsträgers) nach dessen Fertigung und im Rahmen des Toleranzausgleichs der Lagerung der Einzelbauteile bei deren Zusammenbau zu einer Baugruppe wird ein Positionselement mit gleichmäßigem oder rundem Querschnittsprofil, z. B. ein kreiszylindrischer Stift, in das quadratische Loch eingesetzt, wobei das Loch als 2-Wege-Referenz wirkt. Das Einzelbauteil ist dabei durch das quadratische Loch und das darin aufgenommene, ein gleichmäßiges oder rundes Querschnittsprofil aufweisende Positionselement in allen radialen Richtungen relativ zu der Längsmitteachse des Positionselements festgelegt. Im Rahmen der weiteren Montage der Baugruppe bzw. des Hilfsrahmens wird durch Einsetzen eines anderen Positionselements, das ein abgeflachtes oder längliches Querschnittsprofil aufweist, z. B. ein schwertförmiger Dorn, ein Toleranzausgleich wie bei einem Langloch mit darin aufgenommenem Positionselement mit rundem Querschnittsprofil ermöglicht, wobei das quadratische Loch dabei erfindungsgemäß als 1-Weg-Referenz wirkt. Das Einzelbauteil ist hier in den Richtungen, die quer zu zwei parallelen Seiten des quadratischen Loches verlaufen, an denen das das abgeflachte oder längliche Querschnittsprofil aufweisende Positionselement beidseitig anliegt, festgelegt, und in den Richtungen, die rechtwinklig zu den beiden anderen parallelen Seiten des quadratischen Loches verlaufen, gegenüber denen das Positionselement beabstandet ist, frei für eine Positionstoleranz zu anderen Referenzpunkten.

Zur Verwirklichung der 2-Wege-Referenz sowie der 1-Weg-Referenz könnte anstelle eines Positionselements mit kreiszylindrischem Querschnittsprofil auch ein Positionselement mit einem gleichmäßig polygonalen oder gleichmäßig kreuzförmigen Querschnittsprofil in das im Wesentlichen quadratische Loch bzw. das Langloch eingesetzt werden.

Die Erfindung umfasst insbesondere eine Ausführungsform, bei der das als 2-Wege-Referenz und auch als 1-Weg-Referenz geeignete Loch im Querschnitt betrachtet vier gleich lange oder nahezu gleich lange Innenseiten aufweist, die miteinander vier rechte Winkel definieren. Das Loch kann somit insbesondere als quadratisches Loch ausgeführt werden bzw. ein quadratisches Innenprofil aufweisen. Hierauf ist die Erfindung jedoch nicht beschränkt. Bei einer weiteren erfindungsgemäßen Ausführungsform weist das als 2-Wege-Referenz sowie als 1-Weg-Referenz geeignete Loch ein achteckiges Innenprofil auf. Vorzugsweise weist das quadratische oder achteckige Innenprofil abgerundete Ecken auf. Durch Abrunden der Lochecken können Risse an den Ecken des beispielsweise durch Stanzen erzeugten Loches vermieden werden.

Bei einer weiteren erfindungsgemäßen Ausführungsform ist das als 2-Wege-Referenz und auch als 1-Weg-Referenz geeignete Loch ein asymmetrisches Innenprofil aufweist. Beispielsweise kann das asymmetrische Innenprofil eine schräge Ecke und drei abgerundete Ecken aufweisen. Diese Ausgestaltung ist in fertigungstechnischer Hinsicht günstig, da in der schrägen Ecke ein nicht abgetrennter Stanzabfall verbleiben kann. Der nicht abgetrennte Stanzabfall wird dabei vorzugsweise um mindestens 90° gegenüber der Ebene des durch Stanzen erzeugten Loches umgebogen, so dass der Stanzabfall möglichst keinen Kontakt zu dem in das Loch eingesetzten Positionselement, zum Beispiel einem Stift mit kreisrundem Querschnittsprofil hat.

Mindestens zwei der Einzelbauteile, aus denen die erfindungsgemäße Baugruppe aufgebaut ist, sind vorzugsweise als Längsträger ausgeführt. Insbesondere bei derartigen Baugruppen lässt sich die vorliegende Erfindung vorteilhaft nutzen.

Nach einer weiteren bevorzugten Ausgestaltung der Erfindung sind mindestens zwei der Einzelbauteile, aus denen die erfindungsgemäße Baugruppe aufgebaut ist, zueinander im Wesentlichen achsensymmetrisch ausgebildet. Bei einer achsensymmetrischen Ausbildung einer Einzelbauteilpaarung lässt sich die vorliegende Erfindung sehr gut nutzen, um eine durchgängige Beibehaltung der Referenzpunkte vom Einzelbauteil bis zur Baugruppe für die miteinander zu fügenden Bauteile sicherzustellen.

Eine weitere Ausgestaltung der Erfindung sieht vor, dass eines der Einzelbauteile Referenzpunkte in Form mindestens eines als 2-Wege-Referenz geeigneten Loches und mindestens eines Langloches aufweist, während ein anderes der Einzelbauteile Referenzpunkte in Form des als 2-Wege-Referenz sowie als 1-Weg-Referenz geeigneten Loches und in Form mindestens eines Langloches aufweist.

Nach einer weiteren bevorzugten Ausgestaltung der erfindungsgemäßen Baugruppe sind mindestens zwei der Einzelbauteile bzw. die Längsträger durch mindestens einen, vorzugsweise mindestens zwei Querträger miteinander verbunden. Hierdurch lässt sich die Baugruppe beispielweise als Verbundlenkerachse oder Hilfsrahmen realisieren. Der mindestens eine Querträger weist dabei vorzugsweise mindestens zwei Referenzpunkte in Form mindestens eines als 2-Wege-Referenz geeigneten Loches und mindestens eines Langloches auf.

Die mindestens zwei Einzelbauteile bzw. Längsträger der erfindungsgemäßen Baugruppe sind vorzugsweise aus umgeformten Blechteilen oder aus Hydroformrohr gebildet. Unter Hydroformrohr - auch IHU-Rohr genannt - wird ein metallisches, durch Innenhochdruckumformung plastisch umgeformtes Rohr verstanden. Das jeweilige Einzelbauteil kann dabei aus Metallblechen, vorzugsweise Stahlblechen, unterschiedlicher Blechdicke und/oder unterschiedlicher Materialgüte gebildet sein.

Eine weitere Ausgestaltung der erfindungsgemäßen Baugruppe ist dadurch gekennzeichnet, dass deren Einzelbauteile miteinander verschweißt sind.

Nachfolgend wird die Erfindung anhand einer mehrere Ausführungsbeispiele darstellenden Zeichnung näher erläutert. Es zeigen:
- Fig. 1: einen Hilfsrahmen für ein Kraftfahrzeug, in einer Draufsicht;
- Fig. 2: den rechten Längsträger des Hilfsrahmens aus Fig. 1, in Draufsicht;
- Fig. 3: eine vergrößerte Detailansicht eines als 2-Wege-Referenzpunkt dienenden Loches des Längsträgers aus Fig. 2, in Draufsicht;
- Fig. 4a: ein als 2-Wege-Referenzpunkt dienendes quadratisches Loch eines Einzelbauteils mit einem in das Loch eingesetzten Positionselement, das ein kreisrundes Querschnittsprofil aufweist;
- Fig. 4b: das Loch gemäß Fig. 4a nachdem das Einzelbauteil in eine Baugruppe integriert ist, mit einem in das Loch eingesetzten Positionselement, das ein schwertförmiges oder abgeflachtes Querschnittsprofil aufweist, wobei das Loch hier als 1-Weg-Referenz genutzt wird;
- Fig. 5: ein weiteres Ausführungsbeispiel eines im Wesentlichen quadratischen Loches, das als 2-Wege-Referenz sowie als 1-Weg-Referenz geeignet ist; und
- Fig. 6: noch ein weiteres Ausführungsbeispiel eines im Wesentlichen quadratischen Loches, das als 2-Wege-Referenz sowie als 1-Weg-Referenz geeignet ist.

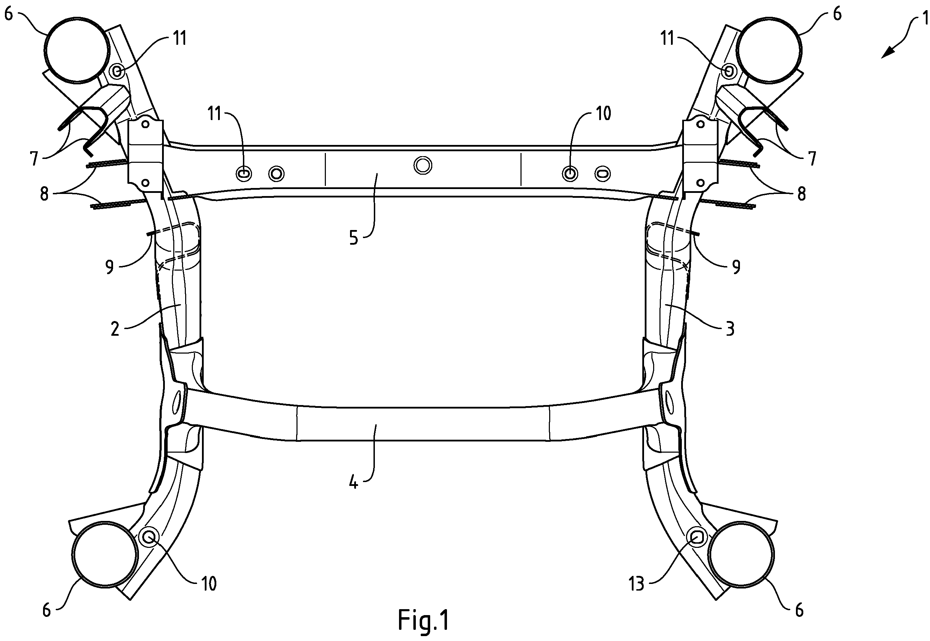

In Fig. 1 ist ein Hilfsrahmen 1 für ein Kraftfahrzeug gezeigt. Der Hilfsrahmen 1 dient der gelenkigen Anbindung von Radaufhängungselementen (nicht gezeigt), die in Form von Fahrwerkslenkern, insbesondere Querlenkern ausgeführt sind. Des Weiteren können an dem Hilfsrahmen 1 weitere Aggregate (nicht gezeigt) gelagert werden, zum Beispiel ein Lenkgetriebe, ein Motorengetriebe und/oder ein Motor zum Antrieb des Kraftfahrzeuges. Üblicherweise wird ein solcher Hilfsrahmen als Montageeinheit zusammen mit den daran montierten Radaufhängungselementen und Aggregaten mit der Karosserie des betreffenden Kraftfahrzeuges verbunden.

Der Hilfsrahmen 1 ist als Baugruppe aus Einzelbauteilen zusammengesetzt, wobei die Einzelbauteile vorzugsweise durch Schweißverbindungen aneinander gefügt sind. Bei den Einzelbauteilen handelt es sich beispielsweise um Blechteile, insbesondere umgeformte Blechteile, und/oder um durch Innenhochdruckumformen umgeformte Metallrohre.

Der in Fig. 1 gezeigte Hilfsrahmen 1 ist aus einem linken Einzelbauteil 2, das im montierten Zustand des Hilfsrahmens 1 im Wesentlichen parallel zur Längsmittelachse des Kraftfahrzeuges angeordnet ist und daher auch als linker Längsträger bezeichnet wird, einem rechten Einzelbauteil 3, das im montierten Zustand des Hilfsrahmens 1 ebenfalls parallel zur Längsmittelachse des Kraftfahrzeuges angeordnet ist und als rechter Längsträger bezeichnet wird, einem vorderen Querträger 4 und einem dazu beabstandeten hinteren Querträger 5 zusammengesetzt. An den Enden der Längsträger 2, 3 sind typischerweise buchsenförmige Halter 6 zur Aufnahme von Lagerbuchsen (nicht gezeigt) angeordnet. An den Außenseiten der Längsträger 2, 3 sind gabelförmige bzw. stegförmige Halter 7, 8, 9 angebracht, die der gelenkigen Anbindung von Fahrwerkslenkern (nicht gezeigt) dienen.

Um die Einzelbauteile 2, 3, 4, 5 des Hilfsrahmens 1, insbesondere die Ausrichtung der Halter 7, 8, 9, in einer vorgegebenen Maßgenauigkeit herzustellen, und um diese Einzelbauteile 2, 3, 4, 5 zu einer Baugruppe in einer vorgegebenen Baugruppengeometrie und Maßgenauigkeit aneinander zu fügen, wird die Bauteillage der Einzelbauteile 2, 3, 4, 5 durch ein sogenanntes Referenzpunktsystem eindeutig festgelegt. Vorzugsweise definiert dabei ein vom Automobilhersteller vorgegebenes Referenzpunktsystem die jeweiligen Referenzpunktsysteme der Einzelbauteile.

Jedes Bauteil hat im dreidimensionalen Raum drei translatorische und drei rotatorische Freiheitsgrade. Um das jeweilige Bauteil 2, 3, 4, 5 eindeutig bestimmt zu lagern, müssen diese sechs Freiheitsgrade miteinander fest verbunden werden. Die Ausrichtung des jeweiligen Bauteils erfolgt gemäß der sogenannten "3-2-1 Regel". Hierzu wird das Bauteil durch 3 Punkte, die eine Primärebene definieren, 2 Punkte, die relativ zu der Primärebene eine Sekundärebene definieren, und 1 Punkt, der relativ zu der Primärebene und der Sekundärebene eine Tertiärebene definiert, statisch bestimmt gelagert. Diese zur Ausrichtung des Bauteils definierten Punkte werden als Referenzpunkte bezeichnet. Sie bilden ein bauteilorientiertes Koordinatensystem, das sogenannte Referenzpunktsystem, und definieren die Lage des Bauteils in diesem Koordinatensystem. Das Referenzpunktsystem basiert auf einem Fahrzeugkoordinatensystem, das seinen Ursprung beispielsweise mittig auf Höhe der Vorderachse des betreffenden Fahrzeuges hat.

Alle Referenzpunkte des einzelnen Bauteils oder einer das Bauteil aufweisenden Baugruppe werden in technischen Zeichnungen des Bauteils bzw. der Baugruppe vermerkt. Als Referenzpunkte dienen insbesondere in dem Bauteil ausgebildete Rundlöcher 10 und Langlöcher 11.

Der linke Längsträger 2 und der rechte Längsträger 3 des in Fig. 1 gezeigten Hilfsrahmens 1 sind sogenannte links/rechts Symmetrieteile. Bei einer derartigen Ausführungsform mit links/rechts Symmetrieteilen tritt herkömmlicherweise das Problem auf, dass eine durchgängige Beibehaltung der Referenzpunkte bei allen Einzelbauteilen, zum Beispiel bei dem rechten Längsträger 3, aufgrund der vom Fahrzeughersteller vorgegebenen Referenzpunkte der Baugruppe (hier des Hilfsrahmens 1) nicht möglich ist. Der Grund dafür liegt darin, dass das Referenzpunktsystem der Baugruppe bzw. des Hilfsrahmens 1 wie auch das Referenzpunktsystem des jeweiligen Längsträgers 2, 3 bzw. der Einzelbauteile gemäß dem Loch-Langloch Prinzip jeweils durch ein Rundloch 10 und ein Langloch 11 bestimmt wird.

Dabei entspricht das als 2-Wege-Referenz fungierende Rundloch 10 der Baugruppe "Hilfsrahmen" dem als 2-Wege-Referenz fungierenden Rundloch 10 des Einzelbauteils "Längsträger links". Das als 1-Weg-Referenz fungierende Langloch der Baugruppe "Hilfsrahmen", die zum Toleranzausgleich bei der weiteren Montage des Hilfsrahmens 1 benötigt wird, entspricht jedoch nicht dem Langloch des Einzelbauteil "Längsträger rechts". Symmetriebedingt würde sich an dieser Position eigentlich das als 2-Wege-Referenz fungierende Rundloch des Einzelbauteils "Längsträger rechts" befinden, was jedoch in der Praxis aufgrund der vom Fahrzeughersteller vorgegebenen Referenzpunkte der Baugruppe nicht der Fall ist. Eine durchgängige Beibehaltung der Referenzpunkte von allen Einzelbauteilen hinsichtlich der vorgegebenen Referenzpunkte der Baugruppe ist daher herkömmlicherweise nicht möglich.

Zur Lösung dieses Problems wurde in der Praxis vorgeschlagen, dasjenige Einzelbauteil, an welchem das Problem auftritt, mit einem spezifischen Referenzpunktsystem zu versehen, indem das betreffende Einzelbauteil mit einem zusätzlichen Langloch versehen wird, welches als 1-Weg-Referenz bei der weiteren Montage der Baugruppe bzw. des Hilfsrahmens einen Toleranzausgleich erlaubt. Diese Lösung ist jedoch unbefriedigend, da sie keine optimale Prozesssicherheit bietet und aufgrund des zusätzlichen Langloches einen zusätzlichen Fertigungsaufwand erfordert.

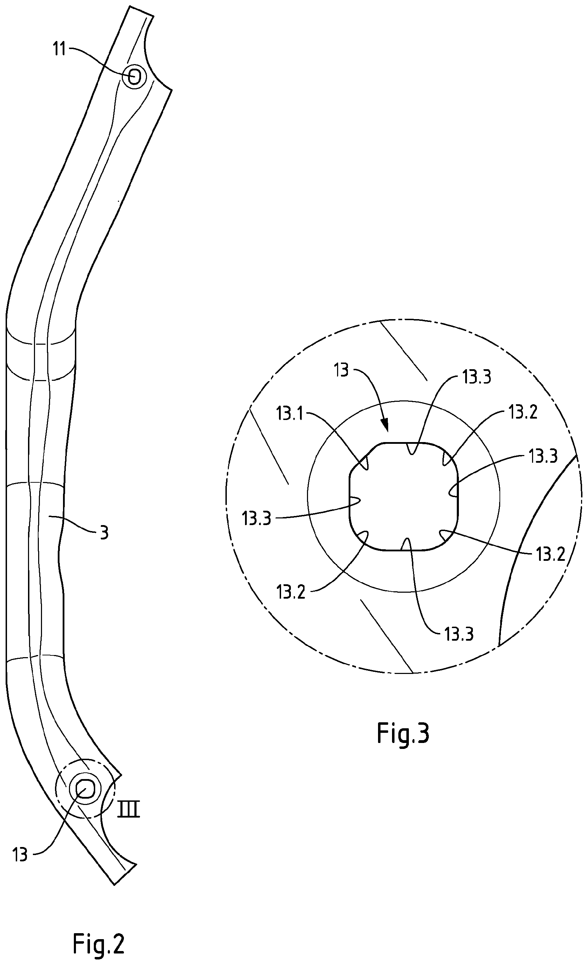

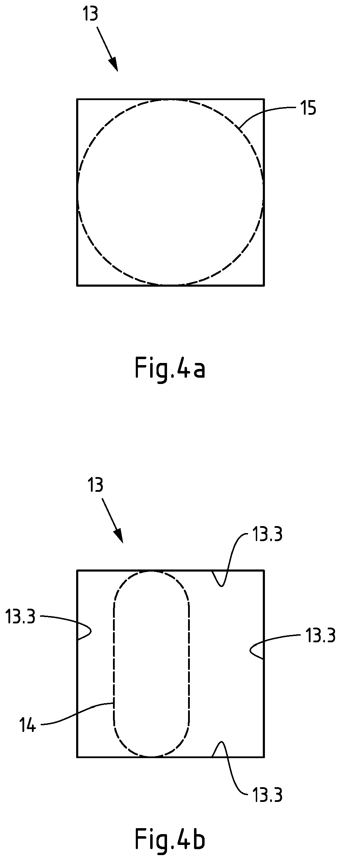

Die vorliegende Erfindung löst das Problem dagegen wie folgt: Anstelle des hinsichtlich der Baugruppe vom Fahrzeughersteller vorgegebenen Langlochs wird ein im Wesentlichen quadratisches Loch 13 in das betreffende Einzelbauteil (hier z. B. den rechten Längsträger 3) eingebracht (vgl. Fig. 3, 4a und 4b). Allgemeiner ausgedrückt, wird das als 2-Wege-Referenz geeignete Loch 13 derart ausgebildet, dass es bei Aufnahme eines Positionselements 14, welches ein abgeflachtes oder längliches Querschnittsprofil aufweist, auch als 1-Weg-Referenz geeignet ist bzw. fungiert. Der Mittelpunkt dieses quadratischen Loches 13 entspricht der Referenzpunktsystem-position des Mittelpunktes des Rundloches 10 des symmetrischen linken Einzelbauteils. Für die Überprüfung der Maßhaltigkeit des Einzelbauteils nach dessen Fertigung sowie im Rahmen des Toleranzausgleichs der Lagerung des Einzelbauteils bei der Baugruppenfertigung (Zusammenbaufertigung) wird ein Positionselement 15 mit kreisrundem Querschnittsprofil in das quadratische Loch 13 eingesetzt, wobei dieses als 2-Wege-Referenz fungiert. Bei der weiteren Montage der Baugruppe bzw. des Hilfsrahmens 1 wird anstelle des Positionselements mit kreisrundem Querschnittsprofil ein Positionselement 14, das ein abgeflachtes oder längliches, beispielsweise schwertförmiges Querschnittsprofil aufweist, in das quadratische Loch 13 eingesetzt, wobei dieses nun als 1-Weg-Referenz fungiert und einen Toleranzausgleich wie bei einem Langloch 11 mit einem darin aufgenommenen Positionselements mit kreisrundem Querschnittsprofil ermöglicht.

In Fig. 2 ist der rechte Längsträger 3 eines Hilfsrahmens 1 aus Fig. 1 als Einzelbauteil gezeigt, wobei an dem Längsträger 3 weder die buchsenförmigen Halter zur Aufnahme von Lagerbuchsen noch die gabelförmigen bzw. stegförmigen Halter 7, 8, 9 zur gelenkigen Anbindung von Fahrwerkslenkern angeschweißt sind. Der Längsträger 3 kann beispielsweise aus einem Hydroformrohr oder aus mehreren miteinander verschweißten Blechschalen gebildet sein. In die Enden des rechten Längsträgers 3 sind Referenzpunkte in Form eines Langloches 11 und in Form eines im Wesentlichen quadratischen Loches 13 eingebracht. Das Langloch 11 fungiert als 1-Weg-Referenz und ermöglicht einen Toleranzausgleich in Richtung seiner radialen Längsachse.

Das im Wesentlichen quadratische Loch 13 ist in Fig. 3 vergrößert dargestellt. Dieses Loch 13 fungiert bei Aufnahme eines Positionselements 15 (vgl. Fig. 4a), welches zum Beispiel ein kreiszylindrisches Querschnittsprofil aufweist, als 2-Wege-Referenz. Das Loch 13 ist erfindungsgemäß derart ausgebildet, dass es bei Aufnahme eines anderen Positionselements 14, welches ein abgeflachtes oder längliches Querschnittsprofil aufweist (vgl. Fig. 4b), auch als 1-Weg-Referenz geeignet ist bzw. fungieren kann.

In Fig. 3 ist zu erkennen, dass das als 2-Wege-Referenz und auch als 1-Weg-Referenz geeignete Loch 13 ein asymmetrisches Innenprofil aufweist, wobei Innenprofil eine schräge Ecke 13.1 und drei abgerundete Ecken 13.2 umfasst. An der schrägen Ecke 13.1 kann ein ausgestanzter Abschnitt des Bauteils verbleiben, wobei dieser Abschnitt so umgebogen wird, dass er ein in dem Loch 13 aufgenommenes Positionselement 15 nicht behindert oder vorzugsweise keinen Kontakt mit diesem hat.

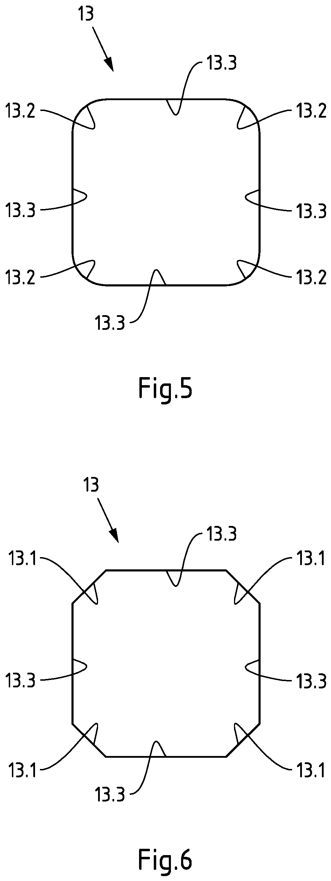

In den Figuren 5 und 6 sind weitere mögliche Ausführungsbeispiele eines als Referenzpunkt fungierenden Loches 13 skizziert, das sowohl als 2-Wege-Referenz als auch als 1-Weg-Referenz geeignet ist. Das Loch 13 weist im Querschnitt betrachtet jeweils vier gleich lange oder nahezu gleich lange Innenseiten 13.3 auf, die miteinander vier rechte Winkel definieren. Das in Fig. 5 skizzierte Loch 13 entspricht einem quadratischen Loch, das abgerundete Innenecken 13.2 aufweist. Das Loch 13 gemäß Fig. 5 weist ein symmetrisches Innenprofil auf.

Das in Fig. 6 skizzierte Loch 13 hat ebenfalls ein symmetrisches Innenprofil. Im Unterschied zu dem Ausführungsbeispiel gemäß Fig. 5 hat das Loch 13 gemäß Fig. 6 vier schräge Ecken 13.1. Die schrägen Ecken 13.1 haben im Lochquerschnitt betrachtet jeweils eine deutlich geringe Länge als jede der vier gleich langen Innenseiten 13.3. Die Innenseite der jeweiligen schrägen Ecke 13.1 begrenzt mit der benachbarten längeren Innenseite 13.3 des Innenprofils einen Winkel von ca. 135°.

Die Ausführung der Erfindung ist nicht auf die in der Zeichnung dargestellten Ausführungsbeispiele beschränkt. Vielmehr sind zahlreiche Varianten der erfindungsgemäßen Baugruppe denkbar, die auch bei einer von den gezeigten Beispielen abweichenden Gestaltung von der vorliegenden Erfindung nach einem der beiliegenden Ansprüche Gebrauch machen. Beispielsweise kann die erfindungsgemäße Baugruppe auch als Verbundlenkerachse mit zueinander symmetrischen linken und rechten Längsträgern ausgeführt sein.

## Patentansprüche

1. Baugruppe für ein Kraftfahrzeug, insbesondere in Form eines Hilfsrahmens (1), aufgebaut aus Einzelbauteilen (2, 3, 5), die zur Positionierung bei ihrer Herstellung und/oder zur Positionierung bei ihrem Zusammenbau miteinander oder mit weiteren Bauteilen (4) ein Referenzpunktsystem aufweisen, wobei dieses durch Referenzpunkte in Form mindestens eines als 2-Wege-Referenz geeigneten Loches (13) und mindestens eines Langloches (11) als 1-Weg-Referenz gebildet ist,
**dadurch gekennzeichnet, dass** das als 2-Wege-Referenz geeignete Loch (13) derart ausgebildet ist, dass es bei Aufnahme eines Positionselements (14), welches ein abgeflachtes oder längliches Querschnittsprofil aufweist, auch als 1-Weg-Referenz geeignet ist, wobei
a) das als 2-Wege-Referenz und auch als 1-Weg-Referenz geeignete Loch (13) im Querschnitt betrachtet vier gleich lange oder nahezu gleich lange Innenseiten (13.3) aufweist, die miteinander vier rechte Winkel definieren; oder
b) das als 2-Wege-Referenz und auch als 1-Weg-Referenz geeignete Loch (13) ein quadratisches oder achteckiges Innenprofil aufweist, wobei das Innenprofil vorzugsweise abgerundete Ecken (13.2) aufweist; oder
c) das als 2-Wege-Referenz und auch als 1-Weg-Referenz geeignete Loch (13) ein asymmetrisches Innenprofil aufweist.

2. Baugruppe nach Anspruch 1, **dadurch gekennzeichnet, dass** das asymmetrische Innenprofil eine schräge Ecke (13.1) und drei abgerundete Ecken (13.2) aufweist.

3. Baugruppe nach Anspruch 1 oder 2, **dadurch gekennzeichnet, dass** mindestens zwei der Einzelbauteile (2, 3) als Längsträger ausgeführt sind.

4. Baugruppe nach einem der Ansprüche 1 bis 3, **dadurch gekennzeichnet, dass** mindestens zwei der Einzelbauteile (2, 3) zueinander im Wesentlichen achsensymmetrisch ausgebildet sind.

5. Baugruppe nach einem der Ansprüche 1 bis 4, **dadurch gekennzeichnet, dass** eines der Einzelbauteile (2) Referenzpunkte in Form mindestens eines als 2-Wege-Referenz geeigneten Loches (10) und mindestens eines Langloches (11) aufweist, während ein anderes der Einzelbauteile Referenzpunkte in Form des als 2-Wege-Referenz sowie als 1-Weg-Referenz geeigneten Loches (13) und in Form mindestens eines Langloches (11) aufweist.

6. Baugruppe nach einem der Ansprüche 1 bis 5, **dadurch gekennzeichnet, dass** mindestens zwei der Einzelbauteile (2, 3) durch mindestens einen, vorzugsweise mindestens zwei Querträger (4, 5) miteinander verbunden.

7. Baugruppe nach Anspruch 6, **dadurch gekennzeichnet, dass** der mindestens eine Querträger (5) mindestens zwei Referenzpunkte in Form mindestens eines als 2-Wege-Referenz geeigneten Loches (10) und mindestens eines Langloches (11) aufweist.

8. Baugruppe nach einem der Ansprüche 1 bis 7, **dadurch gekennzeichnet, dass** mindestens zwei der Einzelbauteile (2, 3, 4, 5) aus umgeformten Blechteilen oder aus Hydroformrohr gebildet sind.

9. Baugruppe nach einem der Ansprüche 1 bis 8, **dadurch gekennzeichnet, dass** die Einzelbauteile (2, 3, 4, 5) miteinander verschweißt sind.

## Claims

1. Assembly for a motor vehicle, in particular in the form of a subframe (1), constructed from individual components (2, 3, 5) which have a reference point system for positioning during their manufacture and/or for positioning during their assembly with one another or with further components (4), this reference point system being formed by reference points in the form of at least one hole (13) suitable as a 2-way reference and at least one elongated hole (11) as a 1-way reference,
**characterized in that** the hole (13) suitable as a 2-way reference is formed in such a way that it is also suitable as a 1-way reference when receiving a position element (14) which has a flattened or elongated cross-sectional profile, wherein
a) the hole (13), which is suitable as a 2-way reference and also as a 1-way reference, has, viewed in cross-section, four inner sides (13.3) of equal or almost equal length which define four right angles with one another; or
b) the hole (13) suitable as a 2-way reference and also as a 1-way reference has a square or octagonal inner profile, the inner profile preferably having rounded corners (13.2); or
c) the hole (13) suitable as a 2-way reference and also as a 1-way reference has an asymmetrical inner profile.

2. Assembly according to claim 1, **characterized in that** the asymmetrical inner profile has one oblique corner (13.1) and three rounded corners (13.2).

3. Assembly according to claim 1 or 2, **characterized in that** at least two of the individual components (2, 3) are designed as longitudinal members.

4. Assembly according to one of claims 1 to 3, **characterized in that** at least two of the individual components (2, 3) are designed to be substantially axisymmetric with respect to one another.

5. Assembly according to one of claims 1 to 4, **characterized in that** one of the individual components (2) has reference points in the form of at least one hole (10) suitable as a 2-way reference and at least one elongated hole (11), while another of the individual components has reference points in the form of the hole (13) suitable as a 2-way reference as well as a 1-way reference and in the form of at least one elongated hole (11).

6. Assembly according to one of claims 1 to 5, **characterized in that** at least two of the individual components (2, 3) are connected to one another by at least one, preferably at least two, cross members (4, 5).

7. Assembly according to claim 6, **characterized in that** the at least one cross member (5) has at least two reference points in the form of at least one hole (10) suitable as a 2-way reference and at least one elongated hole (11).

8. Assembly according to one of claims 1 to 7, **characterized in that** at least two of the individual components (2, 3, 4, 5) are formed from formed sheet metal parts or from hydro-formed tube.

9. Assembly according to one of claims 1 to 8, **characterized in that** the individual components (2, 3, 4, 5) are welded to one another.

## Revendications

1. Module pour un véhicule à moteur, en particulier sous la forme d'un châssis auxiliaire (1), constitué de pièces structurales individuelles (2, 3, 5) qui comprennent, pour le positionnement lors de leur fabrication et/ou pour le positionnement lors de leur assemblage les unes avec les autres ou avec d'autres pièces structurales (4), un système de points de référence, dans lequel celui-ci est formé par des points de référence sous la forme d'au moins un trou (13) approprié en tant que référence à 2 voies et d'au moins un trou oblong (11) en tant que référence à 1 voie,
**caractérisé en ce que** le trou (13) approprié en tant que référence à 2 voies est conçu de telle sorte qu'il soit également approprié en tant que référence à 1 voie lors de la réception d'un élément de positionnement (14), lequel présente un profil de section transversale aplati ou allongé, dans lequel
a) le trou (13) approprié en tant que référence à 2 voies et également en tant que référence à 1 voie, vu en section transversale, comprend quatre côtés internes (13.3) de même longueur ou à peu près de même longueur, qui définissent les uns avec les autres quatre angles droits; ou
b) le trou (13) approprié en tant que référence à 2 voies et également en tant que référence à 1 voie présente un profil interne carré ou octogonal, dans lequel le profil interne comprend de préférence des coins arrondis (13.2); ou
c) le trou (13) approprié en tant que référence à 2 voies et également en tant que référence à 1 voie présente un profil interne asymétrique.

2. Module selon la revendication 1, **caractérisé en ce que** le profil interne asymétrique comprend un coin biseauté (13.1) et trois coins arrondis (13.2).

3. Module selon la revendication 1 ou la revendication 2, **caractérisé en ce qu'**au moins deux des pièces structurales individuelles (2, 3) sont réalisées en tant que supports longitudinaux.

4. Module selon l'une des revendications 1 à 3, **caractérisé en ce qu'**au moins deux des pièces structurales individuelles (2, 3) sont conçues de manière essentiellement symétrique axialement l'une par rapport à l'autre.

5. Module selon l'une des revendications 1 à 4, **caractérisé en ce que** l'une des pièces structurales individuelles (2) comprend des points de référence sous la forme d'au moins un trou (10) approprié en tant que référence à 2 voies et d'au moins un trou oblong (11), tandis qu'une autre des pièces structurales individuelles comprend des points de référence sous la forme du trou (13) approprié en tant que référence à 2 voies ainsi qu'en tant que référence à 1 voie et sous la forme d'au moins un trou oblong (11).

6. Module selon l'une des revendications 1 à 5, **caractérisé en ce qu'**au moins deux des pièces structurales individuelles (2, 3) sont reliées l'une à l'autre par au moins un, de préférence au moins deux supports transversaux (4, 5).

7. Module selon la revendication 6, **caractérisé en ce que** l'au moins un support transversal (5) comprend au moins deux points de référence sous la forme d'au moins un trou (10) approprié en tant que référence à 2 voies et d'au moins un trou oblong (11).

8. Module selon l'une des revendications 1 à 7, **caractérisé en ce qu'**au moins deux des pièces structurales individuelles (2, 3, 4, 5) sont formées à partir de pièces en tôle façonnées ou à partir d'un tube hydroformé.

9. Module selon l'une des revendications 1 à 8, **caractérisé en ce que** les pièces structurales individuelles (2, 3, 4, 5) sont soudées les unes aux autres.
